# EUROPEAN PATENT SPECIFICATION

(11) **EP 2 876 821 B1**
(45) Date of publication and mention of the grant of the patent: **19.12.2018**
(21) Application number: 13819251.3
(22) Date of filing: 17.07.2013
(51) Int. Cl.: H04B 7/10, H01Q 3/24, G01D 4/00

(54) **WIRELESS DEVICE**
DRAHTLOSE VORRICHTUNG
DISPOSITIF SANS FIL

(30) Priority: 18.07.2012 JP 2012159361
(43) Date of publication of application: 27.05.2015
(73) Proprietor: Panasonic Intellectual Property Management Co., Ltd., Osaka-shi, Osaka 540-6207 (JP)
(72) Inventor: MATSUMOTO, Takayuki, Osaka 540-6207 (JP); YOSHIKAWA, Yoshishige, Osaka 540-6207 (JP)
(74) Representative: Schwabe - Sandmair - Marx
(86) International application number: PCT/JP2013/004363
(87) International publication number: WO 2014/013731

(56) References cited:
- EP-A1- 0 718 908
- EP-A1- 2 775 566
- JP-A- H 088 797
- JP-A- H 088 797
- JP-A- H10 313 212
- JP-A- 2001 345 746
- US-A1- 2007 229 366
- US-B1- 6 181 294

## Description

### Technical Field

The present invention relates to a radio (wireless) device for use with a flow meter device which measures the flow (flow rate) of a target.

### Background Art

In recent years, an automated meter reading system has been introduced, in which a flow meter device installed in a building such as a house measures the usage amount of gas, electricity, or tap water, and measured data is gathered via radio (wireless) communication. In the automated meter reading system, there has been a need for a small-sized flow meter device for easier installation, etc..

As such a flow meter device, for example, there has been proposed a flow meter device in which a radio adapter slave device is attached on the surface of a metal casing of a gas meter (e.g., see Patent Literature 1). The radio adapter slave device disclosed in Patent Literature 1 contains therein a board mounted planar antenna. In the board mounted planar antenna, a ground conductor plate and a short conductor of a radiation conductor plate are connected to each other via a wire pattern of a printed circuit board.

### Citation List

### Patent Literature

Patent Literature 1: Japanese Laid-Open Patent Application Publication No. Hei 10-313212. A flow meter is also known from US 6,181,294 B1.

### Summary of Invention

### Technical Problem

However, in the radio adapter slave device including the antenna disclosed in Patent Literature 1, in a non-line-of-sight (NLOS) communication, electric waves output from a gas meter reading master device may be reflected and transmitted repeatedly. The electric waves may be composited and cause a fading. Due to the fading, the success rate of radio (wireless) communication is degraded.

An object of the present invention is to provide a radio device which can improve antenna characteristics by using antenna diversity.

### Solution to Problem

According to an aspect of the present invention, there is provided a radio device of a flow meter device comprising: a plurality of radiation conductors each of which radiates an electric wave of a radio frequency signal; and a circuit board in which a power supplying circuit for supplying radio frequency electric power of the radio frequency signal to the plurality of radiation conductors is mounted; wherein a first radiation conductor and a second radiation conductor, which are included in the plurality of radiation conductors and are different from each other, radiate magnetic fields in different directions and radiate electric fields in difference directions.

In this configuration, a communication success rate can be improved, and an electric wave propagation (travel) distance can be increased.

### Advantageous Effects of Invention

In accordance with the radio device of the present invention, the communication success rate can be improved, and the electric wave propagation distance can be increased.

### Brief Description of Drawings

Fig. 1 is a front view showing the schematic configuration of a flow meter device including a radio device according to Embodiment 1 not being part of the present invention.
Fig. 2 is a side view of the flow meter device of Fig. 1.
Fig. 3 is a perspective view showing the components of the radio device of Fig. 1.
Fig. 4 is a schematic view showing the components of the radio device of Fig. 1.
Fig. 5 is a side view showing the schematic configuration of a flow meter device including a radio device according to Embodiment 2.
Fig. 6 is a view showing the schematic configuration of a radio device according to Embodiment 3.
Fig. 7 is a view showing the schematic configuration of the radio device according to Embodiment 3.

### Description of Embodiment

The invention is defined by independent claim 1 and dependent claims. Hereinafter, preferred embodiments of the present invention will be described with reference to the drawings. Throughout the drawings, the same or corresponding components are designated by the same reference symbols, and will not be described repeatedly. Also, throughout the drawings, the components required to explain the present invention are extracted and shown, and the other components are sometimes omitted.

### (Embodiment 1 not being part of the present invention)

According to Embodiment 1, there is provided a radio device of a flow meter device comprising: a plurality of radiation conductors each of which radiates an electric wave of a radio frequency signal; and a circuit board in which a power supplying circuit for supplying radio frequency electric power of the radio frequency signal to the plurality of radiation conductors is mounted; wherein a first radiation conductor and a second radiation conductor, which are included in the plurality of radiation conductors and are different from each other, radiate magnetic fields in different directions and radiate electric fields in difference directions.

In the radio device according to Embodiment 1, the first radiation conductor may be a linear radiation conductor and extend circumferentially in a clockwise direction when viewed from a front side of the radio device, and the second radiation conductor may be a linear radiation conductor and extend circumferentially in a counterclockwise direction when viewed from the front side of the radio device.

The radio device according to Embodiment 1 may further comprise a ground conductor which is placed to face the circuit board and electrically connected to the circuit board via a ground terminal.

In the radio device according to Embodiment 1, the ground conductor may be placed between the metal casing of the flow meter device and the circuit board and may be electromagnetically connected to the metal casing.

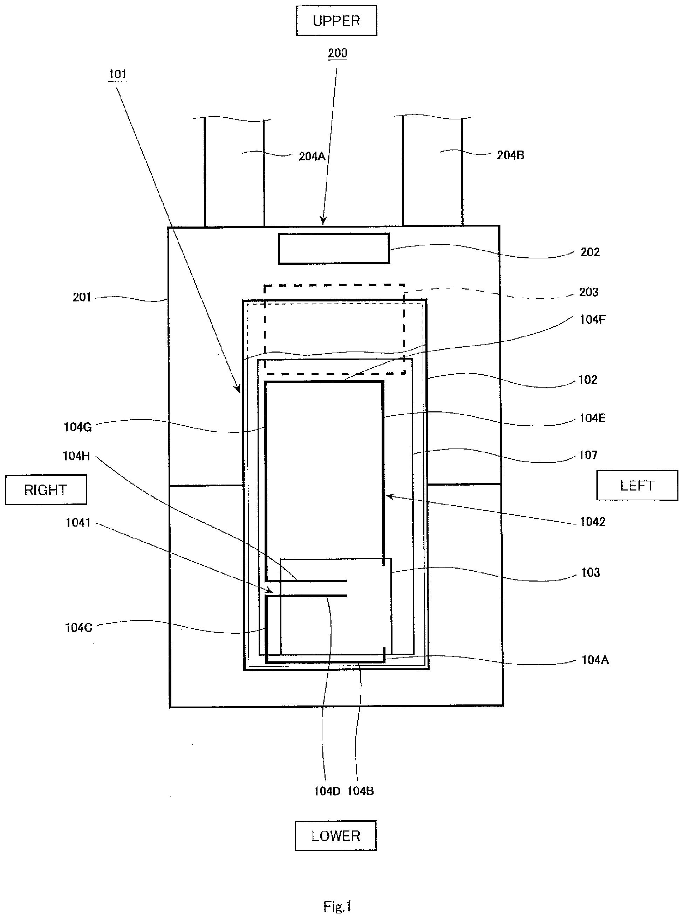

Hereinafter, the exemplary radio device (wireless device) according to Embodiment 1 will be described with reference to Figs. 1 to 4.

### [Configuration of radio device]

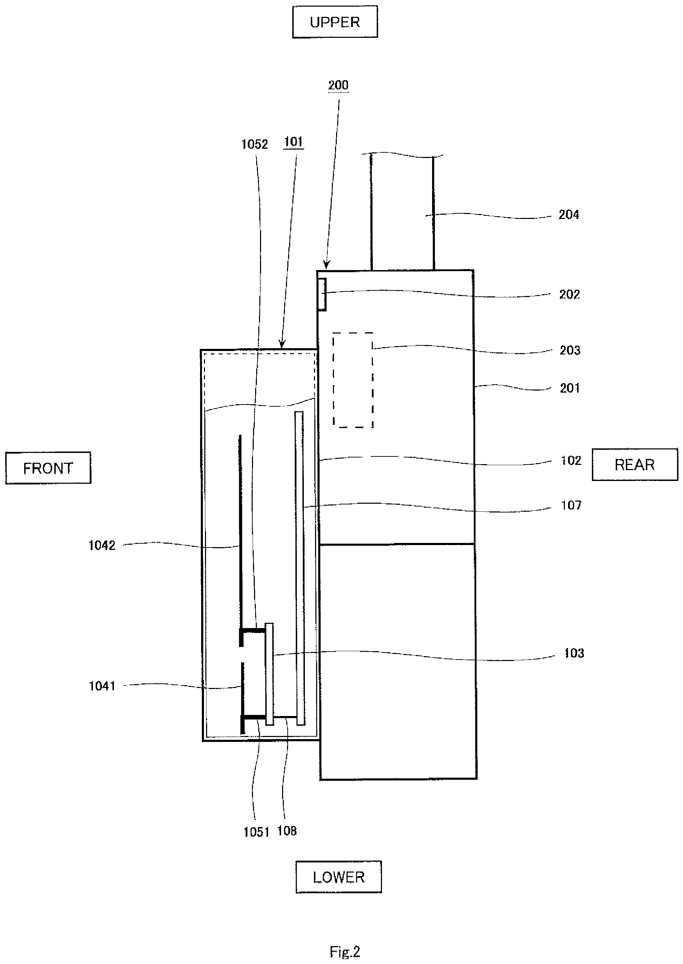

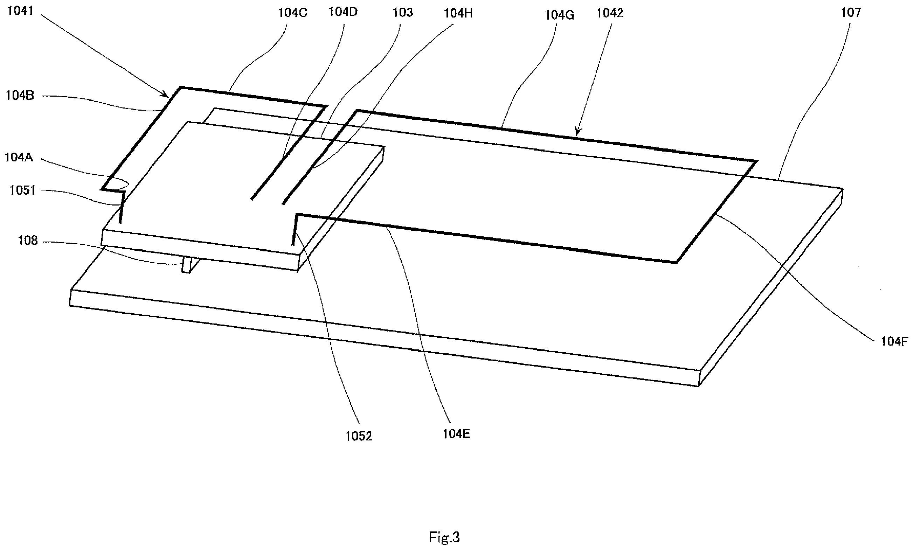

Fig. 1 is a front view showing the schematic configuration of a flow meter device including a radio device according to Embodiment 1. Fig. 2 is a side view of the flow meter device of Fig. 1. Fig. 3 is a perspective view showing the components of the radio device of Fig. 1.

In Fig. 1, the upper and lower sides, and the right and left sides of Fig. 1 show the upper and lower sides, and the right and left sides of the flow meter device and the radio device. In Fig. 2, the upper and lower sides, and the front and rear sides of Fig. 2 show the upper and lower sides, and the front and rear sides of the flow meter device and the radio device.

As shown in Figs. 1 to 3, a radio device 101 according to Embodiment 1 is attached to the front surface of a flow meter device 200 which is a gas meter. The flow meter device 200 includes a metal casing 201, a meter display section 202 and a flow detector 203, and is configured to display the gas flow detected by the flow detector 203 on the meter display section 202.

Although in Embodiment 1, the flow meter device 200 is a gas meter which detects the gas flow, the present invention is not limited to this. The flow meter device 200 may be a measuring unit which measures the flow of tap water, electric power, etc..

An inlet gas pipe 204A and an outlet gas pipe 204B are connected to the upper end portion of the metal casing 201. The meter display section 202 is provided on the upper portion of the front surface of the metal casing 201. The flow detector 203 is placed inside the metal casing 201. The flow detector 203 may have any configuration so long as it is able to obtain the flow of the gas flowing within the metal casing 201, and may be, for example, an ultrasonic flow meter, a flow sensor flow meter, etc..

The radio device 101 includes a resin casing 102 accommodating a radio (wireless) communication section which transmits the gas flow detected by the flow detector 203 to a master device or to a relay device. The resin casing 102 is formed of an electrically insulative resin such as polypropylene or ABS.

The resin casing 102 accommodates therein a ground conductor 107, a circuit board 103, a first linear radiation conductor 1041 which is the major component of a linear inverted-L antenna, and a second linear radiation conductor 1042 which is the major component of the inverted-L antenna. Specifically, in a direction from the rear to the front, the ground conductor 107, the circuit board 103, the first radiation conductor 1041 and the second radiation conductor 1042 are placed in this order (see Fig. 2). Although the radio device 101 according to Embodiment 1 includes the two radiation conductors, the present invention is not limited to this, and the radio device 101 may include three or more radiation conductors.

The ground conductor 107 is placed such that its main surface faces the rear surface (inner surface) of the resin casing 102. In other words, the ground conductor 107 is placed such that the normal direction of its main surface conforms to a forward and rearward direction.

The ground conductor 107 is electrically connected to a connection point formed by a copper foil pattern on the circuit board 103 via a ground terminal 108. The ground terminal 108 is in the vicinity of a mid-point between the origin of the first radiation conductor 1041 and the origin of the second radiation conductor 1042 (power feeding terminal 1051 and power supplying terminal 1052), when viewed from the front side.

In a case where the ground conductor 107 is provided so as to be close to the rear surface of the resin casing 102 (in contact with the rear surface of the resin casing 102, or a distance with the rear surface of the resin casing 102 is small (e.g., several mm)), the ground conductor 107 is electromagnetically connected to the metal casing 201.

For this reason, the metal casing 201 and the ground conductor 107 may be assumed as being at equipotential in terms of a radio frequency. That is, the metal casing 201 can serve as a ground of the linear inverted-L antenna. This makes it possible to ensure a large antenna ground area. Therefore, a high radiation efficiency can be realized.

In a case where the ground conductor 107 is provided so as to be distant from the rear surface of the resin casing 102, the ground conductor 107 can serve as the ground of the linear inverted-L antenna. Therefore, in a case where the ground conductor 107 is caused to serve as the ground, a large antenna ground area can be ensured by increasing the area of its main surface.

The circuit board 103 is formed of, for example, a substrate attached with copper on both sides, and is placed such that the normal direction of its main surface conforms to a forward and rearward direction. A control circuit (not shown), a power supplying circuit (not shown), and the like are mounted on the main surface of the circuit board 103. A control circuit includes at least a transmission circuit for transmitting data in a carrier wave from the antenna and a reception circuit for receiving the electric wave via the antenna.

More specifically, the transmission circuit generates a radio frequency (RF) signal by modulating transmission data, amplifies the RF signal by electric power from the power supplying circuit, and outputs the amplified RF signal to the antenna. The antenna radiates the RF signal to an outside space. The reception circuit accepts as an input the electric wave (RF signal) received via the antenna, amplifies the electric wave, and demodulates the electric wave, thereby obtaining data. The circuit board 103 may include a matching circuit which matches the transmission/reception circuit and the radiation conductor with each other, an amplifier, an oscillator, a mixer, a memory, etc., as necessary.

The first radiation conductor 1041 is connected to the power supplying circuit via a power supplying terminal 1051 protruding from the front surface of the circuit board 103. In the same manner, the second radiation conductor 1042 is connected to the power supplying circuit via a power supplying terminal 1052. The power supplying circuit is configured to supply the RF power forming the RF signal to the first radiation conductor 1041 and the second radiation conductor 1042.

The first radiation conductor 1041 and the second radiation conductor 1042 radiate magnetic fields in different directions and radiate electric fields in difference directions. In other words, the first radiation conductor 1041 and the second radiation conductor 1042 are placed such that the correlation of antenna characteristics between the first radiation conductor 1041 and the second radiation conductor 1042 is low.

Specifically, the first radiation conductor 1041 and the second radiation conductor 1042 are placed such that their base ends are apart from each other. The first radiation conductor 1041 is placed below the second radiation conductor 1042 (see Fig. 1).

The first radiation conductor 1041 and the second radiation conductor 1042 extend along the peripheral surface (side surface) of the resin casing 102, when viewed from the front side of the radio device 101. Although in Embodiment 1, the second radiation conductor 1042 is larger in occupation area than the first radiation conductor 1041, the present invention is not limited to this, and the first radiation conductor 1041 may be larger in occupation area than the second radiation conductor 1042.

The first radiation conductor 1041 and the second radiation conductor 1042 are placed in parallel with the main surface of the circuit board 103 such that they are apart a predetermined distance from the main surface of the circuit board 103 (see Fig. 2).

The first radiation conductor 1041 is placed on the lower portion of the resin casing 102 and extends circumferentially in a clockwise direction, when viewed from the front side of the radio device 101. More specifically, the base end of the first radiation conductor 1041 is located at the left lower corner of the circuit board 103, and the tip end thereof is located above the center of the circuit board 103.

The first radiation conductor 1041 includes a first portion 104A, a second portion 104B, a third portion 104C, and a fourth portion 104D and is configured such that the first portion 104A and the second portion 104B are perpendicular to each other, the second portion 104B and the third portion 104C are perpendicular to each other, and the third portion 104C and the fourth portion 104D are perpendicular to each other.

The first portion 104A extends vertically. The base end of the first portion 104A is the base end of the first radiation conductor 1041. The tip end of the first portion 104A is located in the vicinity of the lower surface of the resin casing 102 and is connected to the base end of the second portion 104B. The second portion 104B extends in the rightward and leftward direction. The tip end of the second portion 104B is located in the vicinity of the corner portion at the right lower side of the circuit board 103, and connected to the base end of the third portion 104C.

The third portion 104C extends vertically. The tip end of the third portion 104C is located above the center portion of the circuit board 103 and connected to the base end of the fourth portion 104D. The fourth portion 104D extends in the rightward and leftward direction. The tip end of the fourth portion 104D is the tip end of the first radiation conductor 1041.

The second radiation conductor 1042 is placed on the upper portion of the resin casing 102 and extends circumferentially in a counterclockwise direction when viewed from the front side of the radio device 101. More specifically, the base end of the second radiation conductor 1042 is located at the left upper corner of the circuit board 103, and the tip end thereof is located above the center of the circuit board 103.

The second radiation conductor 1042 includes a first portion 104E, a second portion 104F, a third portion 104G, and a fourth portion 104H and is configured such that the first portion 104E and the second portion 104F are perpendicular to each other, the second portion 104F and the third portion 104G are perpendicular to each other, and the third portion 104G and the fourth portion 104H are perpendicular to each other.

The first portion 104E extends vertically. The base end of the first portion 104E is the base end of the second radiation conductor 1042. The tip end of the first portion 104E is located below the left upper corner portion of the resin casing 102 and connected to the base end of the second portion 104F. The second portion 104F extends in the rightward and leftward direction. The tip end of the second portion 104F is located below the right upper corner portion of the resin casing 102 and connected to the base end of the third portion 104G.

The third portion 104E extends vertically. The tip end of the third portion 104G is located outward relative to the right upper corner portion of the circuit board 103 and connected to the base end of the fourth portion 104H. The fourth portion 104H extends in the rightward and leftward direction. The tip end of the fourth portion 104H is the tip end of the second radiation conductor 1042.

### [Advantages of radio device]

Next, the advantages of the radio device according to Embodiment 1 will be described with reference to Figs. 1 to 4.

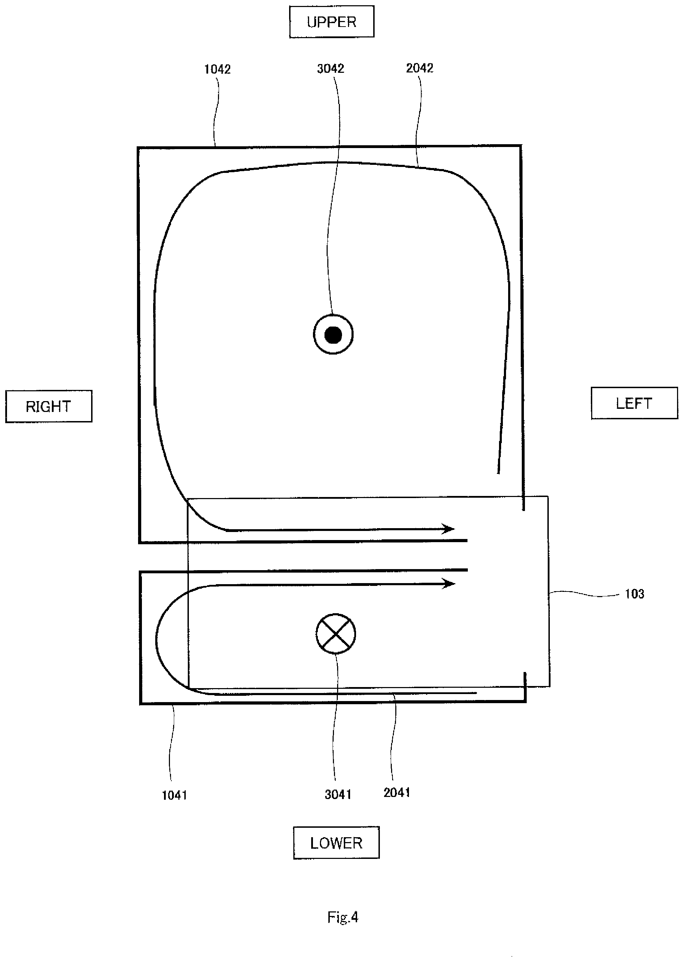

Fig. 4 is a schematic view showing the components of the radio device of Fig. 1. In Fig. 4, the upper and lower sides and the left and right sides of Fig. 4 are the upper and lower sides and the left and right sides of the radio device.

As described above, in the radio device 101 according to Embodiment 1, the first radiation conductor 1041 extends circumferentially in the clockwise direction, while the second radiation conductor 1042 extends circumferentially in the counterclockwise direction.

In this configuration, as shown in Fig. 4, a discharge current (travelling wave) 2041 flows through the first radiation conductor 1041 in the clockwise direction and a discharge current (travelling wave) 2042 flows through the second radiation conductor 1042 in the counterclockwise direction, when viewed from the front side of the radio device 101. Because of this, a first magnetic field 3041 formed by the event that discharge current 2041 flows through the first radiation conductor 1041 is oriented from forward to rearward. On the other hand, a second magnetic field 3042 formed by the event that the discharge current 2042 flows through the second radiation conductor 1042 is oriented from rearward to forward.

As described above, in the radio device 101 according to Embodiment 1, the first magnetic field 3041 and the second magnetic field 3042 are oriented in opposite directions, which allows the correlation of the antenna characteristics between the first radiation conductor 1041 and the second radiation conductor 1042 to be low.

This enables the first radiation conductor 1041 and the second radiation conductor 1042 to realize diversity with a high gain. Therefore, in the radio device 101 according to Embodiment 1, a communication success rate can be improved, and the distance over which the electric wave travels (propagates) can be increased.

In addition, in the radio device 101 according to Embodiment 1, since the antenna diversity using two or more radiation conductors are used, electric power consumption at the reception can be made less than in the case of using a single antenna method such as frequency diversity or time diversity. As a result, the life of the radio device 101 as a product can be extended.

Moreover, in the radio device 101 according to Embodiment 1, the ground conductor 107 or the metal casing 201 serves as the ground of the antenna. This makes it possible to ensure a large antenna ground area and realize a high radiation efficiency.

### (Embodiment 2)

A radio device according to Embodiment 2 is configured to further include a ground cable via which the circuit board and the casing of the flow meter device are electrically connected to each other.

### [Configuration of radio device]

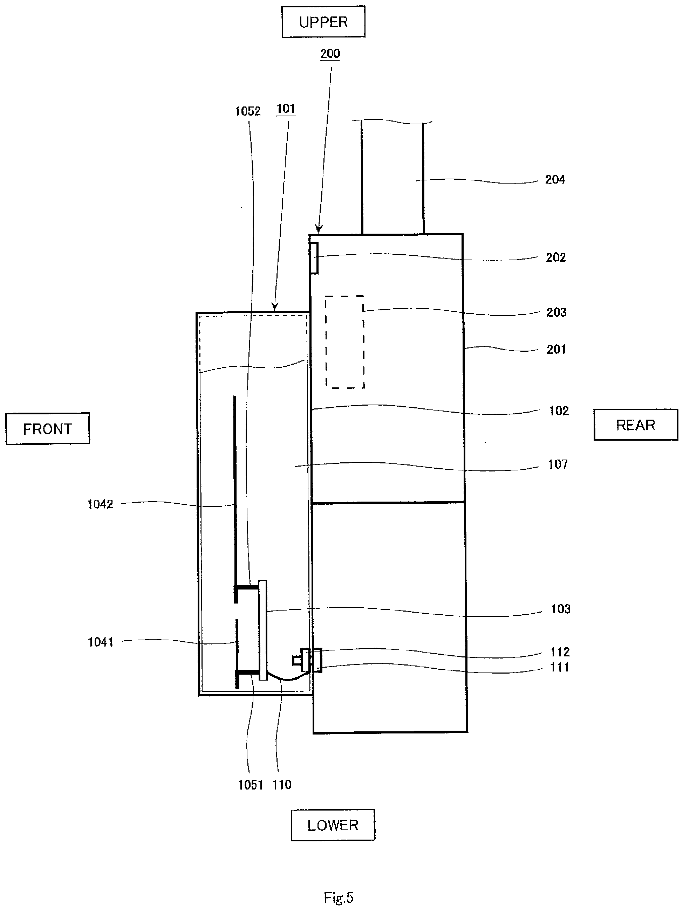

Fig. 5 is a side view showing the schematic configuration of a flow meter device including a radio device according to Embodiment 2. In Fig. 5, the upper and lower sides, and the front and rear sides of Fig. 5 show the upper and lower sides, and the front and rear sides of the flow meter device and the radio device.

As shown in Fig. 5, the radio device 101 according to Embodiment 2 has basically the same configuration as that of the radio device 101 according to Embodiment 1, and is different from the same in that the ground conductor 107 and the ground terminal 108 are replaced by a ground cable 110 and a screw 111.

The screw 111 and a nut 112 mounted to the screw 111 are configured to fasten the resin casing 102 of the radio device 101 and the metal casing 201 to each other. The screw 111 and the nut 112 are made of an electrically-conductive material. As the electrically-conductive material, for example, metal such as aluminum or iron, an electrically-conductive resin, etc., may be used.

The ground cable 110 has an electric conductivity. One end of the ground cable 110 is connected to the connection point of the circuit board 103, while the other end thereof is connected to the metal casing 201 via the screw 111. This allows the circuit board 103 and the metal casing 201 to be electrically connected to each other.

The radio device 101 according to Embodiment 2 configured as described above is able to achieve the same advantages as those of the radio device 101 according to Embodiment 1.

In the radio device 101 according to Embodiment 2, since the connection point of the circuit board 103 and the metal casing 201 are electrically connected to each other via the ground cable 110, the metal casing 201 can serve as the ground of the first radiation conductor 1041 and the second radiation conductor 1042.

Because of the above configuration, the radio device 101 according to Embodiment 2 can realize a high radiation efficiency. In addition since the ground conductor 107 and the ground terminal 108 can be omitted, manufacturing cost can be reduced.

### (Embodiment 3)

A radio device according to Embodiment 3 further includes a matching circuit, the circuit board includes a switch which performs switching of electric connection between the power supplying circuit and the first radiation conductor or the second radiation conductor, and the switch is configured to connect to the matching circuit the radiation conductor of the first radiation conductor or the second radiation conductor which is not used for transmission.

### [Configuration of radio device]

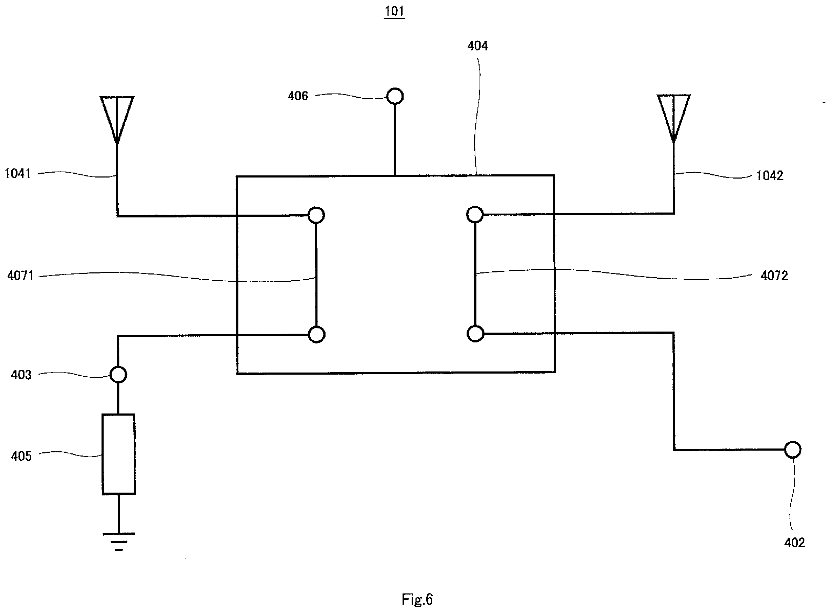

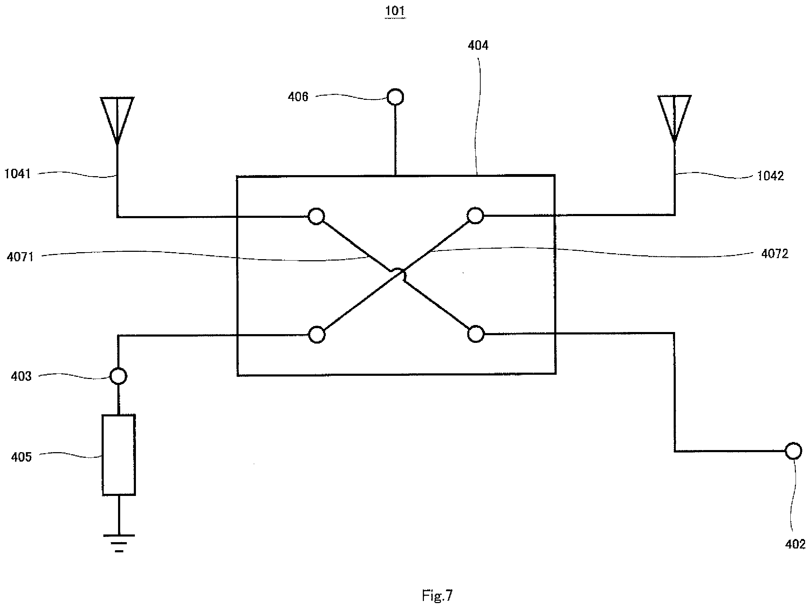

Figs. 6 and 7 are schematic views showing the schematic configuration of the radio device according to Embodiment 3.

The radio device 101 according to Embodiment 3 has basically the same configuration as that of the radio device 101 according to Embodiment 1, and is different from the same in that the radio device 101 according to Embodiment 3 further includes a matching circuit 405 and the circuit board 103 includes a switch 404.

As shown in Figs. 6 and 7, the switch 404 is configured to perform switching of connection between the first radiation conductor 1041 or the second radiation conductor 1042 and a transmission signal input terminal 402. The switch 404 includes a matching circuit connection terminal 403 connected to the matching circuit 405, and a switch control signal input terminal 406. The matching circuit 405 is constituted by, for example, a LC circuit which can well enhance the ground impedance of the radiation conductor connected to the matching circuit 405 as compared to the case where the radiation conductor is not connected to the matching circuit 105.

In response to a control signal input to the switch control signal input terminal 406, the switch 404 connects the radiation conductor of either one of the first radiation conductor 1041 and the second radiation conductor 1042 to the transmission signal input terminal 402, and the other of the first radiation conductor 1041 and the second radiation conductor 1042 to the matching circuit connection terminal 403.

Although the radio device 101 according to Embodiment 3 has basically the same configuration as that of the radio device 101 according to Embodiment 1, the present invention is not limited to this, and may have basically the same configuration as that of the radio device 101 according to Embodiment 2.

### [Operation of radio device]

For example, it is supposed that a control signal for commanding the first radiation conductor 1041 to be connected to the matching circuit 405 (matching circuit connection terminal 403) and the second radiation conductor 1042 to be connected to the transmission signal input terminal 402, is input to the switch control signal input terminal 406.

As shown in Fig. 6, in response to this command, a first antenna switch internal signal path 4071 connects the first radiation conductor 1041 to the matching circuit connection terminal 403, thereby connecting the first radiation conductor 1041 to the matching circuit 405. In addition, a second antenna switch internal signal path 4072 connects the second radiation conductor 1042 to the transmission signal input terminal 402, so that the second radiation conductor 1042 outputs a transmission signal.

Or, for example, it is supposed that a control signal for commanding the first radiation conductor 1041 to be connected to the transmission signal input terminal 402 and the second radiation conductor 1042 to be connected to the matching circuit 405 (matching circuit connection terminal 403), is input to the switch control signal input terminal 406..

In response to this, as shown in Fig. 7, the first antenna switch internal signal path 4071 connects the first radiation conductor 1041 to the transmission signal input terminal 402, so that the first radiation conductor 1041 outputs a transmission signal. In addition, the second antenna switch internal signal path 4072 connects the second radiation conductor 1042 to the matching circuit connection terminal 403, so that the second radiation conductor 1042 is connected to the matching circuit 405.

### [Advantages of radio device]

In a case where the antenna diversity is implemented by using the two radiation conductors and the radio device 101 is used as a transmitter, one of the two radiation conductors is used as a transmission antenna and the other radiation conductor is not used. In this case, if the two radiation conductors are close to each other in distance, the radiation conductor which is not used affects the radiation conductor chosen as the radiation conductor for transmission. Therefore, characteristics may be degraded as compared to a case where the radiation conductor chosen for transmission is singly used. Therefore, it becomes necessary to mitigate the degradation of the characteristics.

For example, it is necessary to set the distance which is equal to or larger than λ/4 (λ: wavelength) between the two radiation conductors. Especially, in the case where a frequency is low, this distance increases, and adequate diversity characteristics cannot be realized. For example, when the frequency is 169MHz, λ/4 is 44cm. It is difficult to accommodate the two radiation conductors such that they are 44cm or more apart from each other in a normal radio device, for use with the flow meter device.

However, in the radio device 101 according to Embodiment 3, to suppress the two radiation conductors from affecting each other, the switch 404 performs switching to connect the radiation conductor which is not used to transmit the signal to the ground (ground conductor 107 or metal casing 201) via the matching circuit 405. This makes it possible to suppress the radiation conductor which is not used for transmission from affecting the radiation conductor used to transmit the signal.

With the advantages, the radio device 101 according to Embodiment 3 can realize the radiation characteristics which are close to those in the case where the radiation conductor is used singly when the signal is transmitted.

Although in the radio devices 101 of Embodiment 1 to Embodiment 3, the first radiation conductor 1041 and the second radiation conductor 1042 are linear inverted-L antenna, one or both of the first radiation conductor 1041 and the second radiation conductor 1042 may be constituted by a planar inverted-F radiation conductor. In a further alternative, the first radiation conductor 1041 and the second radiation conductor 1042 may be constituted by, for example, a planar dipole antenna, a loop antenna, or meander line antenna.

Numeral improvements and alternative embodiments of the present disclosure will be conceived by those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the invention and all modifications which come within the scope of the appended claims are reserved.

### Industrial Applicability

A radio device of the present invention is useful as a radio device which can improve antenna performance.

### Reference Signs List

- 101: radio device
- 102 resin: casing
- 103: circuit board
- 104A: first portion
- 104B: second portion
- 104C: third portion
- 104D: fourth portion
- 104E: first portion
- 104F: second portion
- 104G: third portion
- 104H: fourth portion
- 107: ground conductor
- 108: ground cable
- 111: screw
- 112: nut
- 200: flow meter device
- 201: metal casing
- 202: metal display section
- 203: flow meter device
- 204A: gas inlet pipe
- 204B: gas outlet pipe
- 402: transmission signal input terminal
- 403: matching circuit connection terminal
- 404: switch
- 405: matching circuit
- 406: switch control signal input terminal
- 1041: first radiation conductor
- 1042: second radiation conductor
- 1051: power supplying terminal
- 1052: power supplying terminal
- 2041: discharge current
- 2042: discharge current
- 3041: first magnetic field
- 3042: second magnetic field
- 4071: first antenna switch internal signal path
- 4072: second antenna switch internal signal path

## Claims

1. A flow meter device (200) including a radio device (101), the flow meter device comprising:
a plurality of radiation conductors (1041, 1042) each of which radiates an electric wave of a radio frequency signal;
a circuit board (103) in which a power supplying circuit for supplying radio frequency electric power of the radio frequency signal to the plurality of radiation conductors is mounted;
a metal casing (201); and
a ground cable (110) for electrically connecting the circuit board to the metal casing of the flow meter device,
wherein a first radiation conductor and a second radiation conductor, which are included in the plurality of radiation conductors and are different from each other, radiate magnetic fields in different directions and radiate electric fields in different directions,
wherein the first radiation conductor (1041) is a linear radiation conductor and extends circumferentially in a clockwise direction when viewed from a front side of the radio device; and
wherein the second radiation conductor (1042) is a linear radiation conductor and extends circumferentially in a counterclockwise direction when viewed from the front side of the radio device.

2. The flow meter device according to claim 1, further comprising:
a matching circuit (405);
wherein the circuit board includes a switch (404) which performs switching of electric connection between the power supplying circuit and the first radiation conductor or the second radiation conductor; and
wherein the switch is configured to connect to the ground via the matching circuit the radiation conductor of the first radiation conductor or the second radiation conductor which is not used for transmission.

3. The flow meter device according to claim 1 or 2, further comprising:
a ground conductor (107) which is placed to face the circuit board and electrically connected to the circuit board via a ground terminal (108).

4. The flow meter device according to claim 3,
wherein the ground conductor is placed between the metal casing and the circuit board and electromagnetically connected to the metal casing.

## Patentansprüche

1. Durchflussmessvorrichtung (200), umfassend eine Funkvorrichtung (101), wobei die Durchflussmessvorrichtung Folgendes umfasst:
eine Vielzahl von Strahlungsleitern (1041, 1042), von denen jeder eine elektrische Welle eines Hochfrequenzsignals ausstrahlt;
eine Leiterplatte (103),
in der eine Leistungsversorgungsschaltung zum Versorgen der Vielzahl von Strahlungsleitern mit elektrischer Hochfrequenzleistung des Hochfrequenzsignals angebracht ist;
ein Metallgehäuse (201); und
ein Erdungskabel (110) zum elektrischen Verbinden der Leiterplatte mit dem Gehäuse der Durchflussmessvorrichtung,
wobei ein erster Strahlungsleiter und ein zweiter Strahlungsleiter, die in der Vielzahl von Strahlungsleitern enthalten sind und sich voneinander unterscheiden, Magnetfelder in verschiedene Richtungen ausstrahlen und elektrische Felder in verschiedene Richtungen ausstrahlen,
wobei der erste Strahlungsleiter (1041) ein linearer Strahlungsleiter ist und sich in Umfangsrichtung im Uhrzeigersinn erstreckt, wenn er von einer vorderen Seite der Funkvorrichtung betrachtet wird; und
wobei der zweite Strahlungsleiter (1042) ein linearer Strahlungsleiter ist und sich in Umfangsrichtung im Gegenuhrzeigersinn erstreckt, wenn er von der vorderen Seite der Funkvorrichtung betrachtet wird.

2. Durchflussmessvorrichtung nach Anspruch 1, ferner umfassend:
eine Anpassungsschaltung (405);
wobei die Leiterplatte einen Schalter (404) umfasst, der ein Schalten der elektrischen Verbindung zwischen der Leistungsversorgungsschaltung und dem ersten Strahlungsleiter oder dem zweiten Strahlungsleiter durchführt; und
wobei der Schalter konfiguriert ist, mit der Erdung über die Anpassungsschaltung den Strahlungsleiter des ersten Strahlungsleiters oder den zweiten Strahlungsleiter, der für die Übermittlung nicht verwendet wird, zu verbinden.

3. Durchflussmessvorrichtung nach Anspruch 1 oder 2, ferner umfassend:
einen Erdleiter (107),
der angeordnet ist, um der Leiterplatte gegenüberzuliegen, und mit der Leiterplatte über einen Erdanschluss (108) verbunden ist.

4. Durchflussmessvorrichtung nach Anspruch 3,
wobei der Erdleiter zwischen dem Metallgehäuse und der Leiterplatte angeordnet ist und mit dem Metallgehäuse elektromagnetisch verbunden ist.

## Revendications

1. Dispositif débitmètre (200) incluant un dispositif radio (101), le dispositif débitmètre comprenant :
une pluralité de conducteurs de rayonnement (1041, 1042) dont chacun fait rayonner une onde électrique d'un signal de radiofréquence ;
une carte de circuit imprimé (103) dans laquelle un circuit d'alimentation électrique pour fournir une puissance électrique de radiofréquence du signal de radiofréquence à la pluralité de conducteurs de rayonnement est monté ;
un boîtier de métal (201); et
un câble de mise à la terre (110) pour électriquement connecter la carte de circuit imprimé au boîtier de métal du dispositif débitmètre,
dans lequel un premier conducteur de rayonnement et un second conducteur de rayonnement, qui sont inclus dans la pluralité de conducteurs de rayonnement et sont différents l'un de l'autre, font rayonner des champs magnétiques dans différentes directions et font rayonner des champs électriques dans différentes directions,
dans lequel le premier conducteur de rayonnement (1041) est un conducteur de rayonnement linéaire et s'étend circonférentiellement dans un sens des aiguilles d'une montre en vue à partir d'un côté avant du dispositif radio ; et
dans lequel le second conducteur de rayonnement (1042) est un conducteur de rayonnement linéaire et s'étend circonférentiellement dans un sens inverse des aiguilles d'une montre en vue à partir du côté avant du dispositif radio.

2. Dispositif débitmètre selon la revendication 1, comprenant en outre :
un circuit d'adaptation (405) ;
dans lequel la carte de circuit imprimé inclut un commutateur (404) qui réalise une commutation de connexion électrique entre le circuit d'alimentation électrique et le premier conducteur de rayonnement ou le second conducteur de rayonnement ; et
dans lequel le commutateur est configuré pour connecter à la terre, par l'intermédiaire du circuit d'adaptation, le conducteur de rayonnement du premier conducteur de rayonnement ou du second conducteur de rayonnement qui n'est pas utilisé pour la transmission.

3. Dispositif débitmètre selon la revendication 1 ou 2, comprenant en outre :
un conducteur de mise à la terre (107) qui est placé pour faire face à la carte de circuit imprimé et électriquement connecté à la carte de circuit imprimé par l'intermédiaire d'une borne de mise à la terre (108).

4. Dispositif débitmètre selon la revendication 3,
dans lequel le conducteur de mise à la terre est placé entre le boîtier de métal et la carte de circuit imprimé et électromagnétiquement connecté au boîtier de métal.
